# EUROPEAN PATENT APPLICATION

(11) **EP 4 293 091 A1**
(43) Date of publication of application: **20.12.2023**
(21) Application number: 22752589.6
(22) Date of filing: 27.01.2022
(51) Int. Cl.: C09J 175/06, B32B 7/12, B32B 27/00, B65D 65/40, C09J 7/30, C09J 11/04, C09J 11/06, C09J 175/08

(54) **ADHESIVE, LAMINATE, AND PACKAGING MATERIAL**

(30) Priority: 09.02.2021 JP 2021018892
(71) Applicant: DIC CORPORATION, Itabashi-ku Tokyo 174-8520 (JP)
(72) Inventor: TOMITA, Daiki, Tokyo 174-8520 (JP); TAKEDA, Miho, Tokyo 174-8520 (JP); KUROI, Takeshi, Tokyo 174-8520 (JP); KARIMATA, Toshihiro, Tokyo 174-8520 (JP)
(74) Representative: Gerauer, Marc Philippé
(86) International application number: PCT/JP2022/002992
(87) International publication number: WO 2022/172760

(57) **Abstract**

Provided is a two-pack curable adhesive less likely to cause an appearance defect due to air bubbles or the dissolution of a printing layer. A two-pack curable adhesive, containing: a polyisocyanate composition (A) containing a urethane prepolymer (A1), which is a reaction product of polyester polyol (a1), polyether polyol (a2), and a polyisocyanate compound (a3); and a polyol composition (B) containing polyester polyol (B1), in which polyhydric alcohol (a1-2) used in the synthesis of the polyester polyol (a1) and polyhydric alcohol (b1-2) used in the synthesis of the polyester polyol (B 1) contain 80% by mass or more of diethylene glycol, respectively, and the compound amount of the polyester polyol (a1) is 50% by mass or more and 90% by mass or less with respect to the total amount of the polyester polyol (a1) and the polyether polyol (a2).

## Description

### TECHNICAL FIELD

The present invention relates to an adhesive, a laminate to be obtained by using the adhesive, and a packaging material.

### BACKGROUND ART

Designability, functionality, preservability, convenience, and transportability are imparted to a laminate used in various packaging materials, labels, and the like, by laminating a base material such as various plastic films, metal foils, and paper, and in particular, a package obtained by molding the laminate into the shape of a bag is used as a package for food, a medicine, a detergent, and the like.

In the related art, the laminate used in the package was mainly obtained by a dry lamination method in which the base material is coated with an adhesive dissolved in a volatile organic solvent (may be referred to as a solvent-type laminating adhesive), the organic solvent is volatilized in a process of passing through an oven, and another base material is pasted, but recently, a demand for a reactive two-pack type laminating adhesive (hereinafter, referred to as a solvent-free adhesive), which does not contain the volatile organic solvent, has increased from the viewpoint of reducing an environmental load and improving a work environment (PTL 1).

### CITATION LIST

### PATENT LITERATURE

PTL 1: JP2014-159548A

### SUMMARY OF INVENTION

### TECHNICAL PROBLEM

The solvent-free adhesive has many advantages that there is no dry step and no solvent to be discharged, a running cost is reasonable with energy conservation, and there is no concern that the solvent remains in the laminate after pasting the plastic films with each other or the laminate after pasting the plastic film and the metal foil or a metal vapor deposition layer. On the other hand, there were problems that air bubbles entrapped when the adhesive is mixed and applied to the base material are likely to remain in a cured coating film of the adhesive, the air bubbles are aggregated in an aging process, and an appearance defect is likely to occur.

In addition, in the laminate for a packaging material, in general, a printing layer is provided on the back side of the base material to be the outermost layer (when seen from the content) with a printing ink, and the printing layer and another base material are pasted through the adhesive. On the other hand, it is necessary to design components used in the solvent-free adhesive to have a low molecular weight such that a viscosity is obtained at which coating can be performed when heated to approximately 40°C to 100°C, but there is a concern that polyol with a low molecular weight easily re-dissolves the printing layer, and causes the appearance defect such as darkening in the printing layer.

The invention has been made in consideration of such circumstances, and an object thereof is to provide a solvent free adhesive less likely to cause an appearance defect due to air bubbles or the dissolution of a printing layer, a laminate to be obtained by using the adhesive described above, and a packaging material.

### SOLUTION TO PROBLEM

The invention relates to a two-pack curable adhesive, containing: a polyisocyanate composition (A) containing a urethane prepolymer (A1), which is a reaction product of polyester polyol (a1), polyether polyol (a2), and a polyisocyanate compound (a3); and a polyol composition (B) containing polyester polyol (B1), which is a reaction product of a monomer composition containing a polycarboxylic acid (b1-1) and polyol (b1-2), in which the polyester polyol (a1) is a reaction product of a monomer composition containing a polycarboxylic acid (a1-1) and polyhydric alcohol (a1-2), the polyhydric alcohol (a1-2) contains 80% by mass or more of diethylene glycol, the polyester polyol (a1) has a compound amount of 50% by mass or more and 90% by mass or less with respect to a total amount of the polyester polyol (a1) and the polyether polyol (a2), and the polyhydric alcohol (b1-2) contains 80% by mass or more of diethylene glycol.

Further, the invention relates to a laminate including: a first base material; a second base material; and an adhesive layer for pasting the first base material and the second base material, in which the adhesive layer is a cured coating film of the two-pack curable adhesive described above, and a packaging material including the laminate.

### ADVANTAGEOUS EFFECTS OF INVENTION

According to the adhesive of the invention, it is possible to provide the laminate in which the appearance defect of the laminate due to the air bubbles or the re-dissolution of an ink is suppressed, and the packaging material.

### DESCRIPTION OF EMBODIMENTS

### <Adhesive>

The adhesive of the invention is a two-pack curable adhesive containing a polyisocyanate composition (A) and a polyol composition (B). Hereinafter, the adhesive of the invention will be described in detail.

### (Polyisocyanate Composition (A))

### (Urethane Prepolymer (A1))

The polyisocyanate composition (A) used in the adhesive of the invention contains a urethane prepolymer (A1), which is a reaction product of polyester polyol (a1), polyether polyol (a2), and a polyisocyanate compound (a3). The polyester polyol (a1) is a reaction product of a monomer composition containing a polycarboxylic acid (a1-1) and polyhydric alcohol (a1-2), and polyhydric alcohol (a1-2) contains 80% by mass or more of diethylene glycol.

Examples of the polycarboxylic acid (a1-1) used in the synthesis of the polyester polyol (a1) include: an aromatic polybasic acid such as an orthophthalic acid, a terephthalic acid, an isophthalic acid, a phthalic anhydride, a 1,4-naphthalene dicarboxylic acid, a 2,5-naphthalene dicarboxylic acid, a 2,6-naphthalene dicarboxylic acid, a 2,3-naphthalene dicarboxylic anhydride, a naphthalic acid, a trimellitic acid, a trimellitic anhydride, a pyromellitic acid, a pyromellitic anhydride, a biphenyl dicarboxylic acid, a 1,2-bis(phenoxy)ethane-p,p'-dicarboxylic acid, a benzophenone tetracarboxylic acid, a benzophenone tetracarboxylic dianhydride, a sodium 5-sulfoisophthalic acid, a tetrachlorophthalic anhydride, and a tetrabromophthalic anhydride;
a methyl esterified product of an aromatic polybasic acid such as a dimethyl terephthalic acid and dimethyl 2,6-naphthalene dicarboxylate;
an aliphatic polybasic acid such as a malonic acid, a succinic acid, a succinic anhydride, a glutaric acid, an adipic acid, a pimelic acid, a suberic acid, an azelaic acid, a sebacic acid, a fumaric acid, a maleic acid, a maleic anhydride, and an itaconic acid;
an alkyl esterified product of an aliphatic polybasic acid such as dimethyl malonate, diethyl malonate, dimethyl succinate, dimethyl glutarate, dimethyl adipate, diethyl pimelate, diethyl sebacate, dimethyl fumarate, diethyl fumarate, dimethyl maleate, diethyl maleate; and
an alicyclic polybasic acid such as a 1,1-cyclopentane dicarboxylic acid, a 1,2-cyclopentane dicarboxylic acid, a 1,3-cyclopentane dicarboxylic acid, a 1,2-cyclohexane dicarboxylic acid, a 1,3-cyclohexane dicarboxylic acid, a 1,4-cyclohexane dicarboxylic acid, a tetrahydrophthalic anhydride, a 4-methyl hexahydrophthalic anhydride, a hexahydrophthalic anhydride, a cyclohexane-1,2,4-tricarboxylic-1,2-anhydride, a himic anhydride, and a chlorendic anhydride, and among them, one type or two or more types can be used in combination.

It is preferable that the polycarboxylic acid (a1-1) contains an adipic acid, from the viewpoint of being excellent in an effect of decreasing the viscosity of the urethane prepolymer (Al) to improve coatability at a low temperature. The compound amount of the adipic acid can be suitably adjusted in accordance with a temperature when performing coating, and the like, and is preferably 80% by mass or more, and more preferably 90% by mass or more, with respect to the polycarboxylic acid (al-1). The total amount of the polycarboxylic acid (a1-1) may be an adipic acid.

The polyhydric alcohol (a1-2) that can be used together with the diethylene glycol is not particularly limited. Examples of difunctional alcohol include: aliphatic diol such as ethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl 1,5-pentanediol, neopentyl glycol, 1,6-hexanediol, 1,4-bis(hydroxymethyl) cyclohexane, and 2,2,4-trimethyl-13-pentanediol;
ether glycol such as polyoxyethylene glycol and polyoxypropylene glycol;
modified polyether diol obtained by ring-opening polymerization between aliphatic diol and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether,
lactone-based polyester polyol obtained by a polycondensation reaction between aliphatic diol and various lactones such as lanthanoid and ε-caprolactone;
bisphenol such as bisphenol A and bisphenol F; and
an alkylene oxide adduct of bisphenol obtained by adding ethylene oxide, propylene oxide, or the like to bisphenol such as bisphenol A and bisphenol F.

Examples of trifunctional or higher polyol include: aliphatic polyol such as trimethylol ethane, trimethylol propane, glycerin, hexane triol, and pentaerythritol;
modified polyether polyol obtained by ring-opening polymerization between aliphatic polyol and various cyclic ether bond-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether, and
lactone-based polyester polyol obtained by a polycondensation reaction between aliphatic polyol and various lactones such as ε-caprolactone.

Since it is difficult for an ink to be re-dissolved when the adhesive is applied onto a printing layer, the ratio of the diethylene glycol to the polyhydric alcohol (a1-2) is preferably 90% by mass or more, and more preferably 95% by mass or more. The total amount of the polyhydric alcohol (a1-2) may be the diethylene glycol.

The number average molecular weight of the polyester polyol (a1) is not particularly limited, and as an example, is 400 or more and 10,000 or less, and more preferably 500 or more and 2,000 or less. Note that, the number average molecular weight in this description is a value measured by gel permeation chromatography (GPC) in the following condition.
Measurement Device; HLC-8320GPC, manufactured by Tosoh Corporation
Column; TSKgel 4000HXL, TSKgel 3000HXL, TSKgel 2000HXL, TSKgel 1000HXL, manufactured by Tosoh Corporation
Detector; RI (a differential refractometer)
Data Processing; Multistation GPC-8020 model II, manufactured by Tosoh Corporation
Measurement Condition; a column temperature of 40°C
   Solvent tetrahydrofuran
   Flow Rate 0.35 ml/minute
Standard; monodisperse polystyrene
Sample; 0.2% by mass of a tetrahydrofuran solution in terms of a resin solid content, which is filtered with a microfilter (100 pl)

Examples of the polyether polyol (a2) include polyether polyol obtained by polymerizing an oxirane compound such as ethylene oxide, propylene oxide, butylene oxide, and tetrahydrofuran with water, and low-molecular-weight polyol such as ethylene glycol, propylene glycol, trimethylol propane, and glycerin as an initiator, and among them, one type or two or more types can be used in combination. The number of functional groups of the polyether polyol (a2) is not particularly limited, and trifunctional or higher polyether polyol can also be used, in addition to difunctional polyether polyol. It is preferable to use difunctional or trifunctional polypropylene glycol.

The number average molecular weight of the polyether polyol (a2) is not particularly limited, and as an example, is 200 or more and 10,000 or less, and more preferably 400 or more and 2,000 or less.

The compound amount of the polyester polyol (a1) with respect to the total amount of the polyester polyol (a1) and the polyether polyol (a2) is 50% by mass or more and 90% by mass or less.

The polyisocyanate compound (a3) is not particularly limited, and examples thereof include aromatic diisocyanate, aromatic aliphatic diisocyanate, aliphatic diisocyanate, alicyclic diisocyanate, a biuret, a nurate, an adduct, an allophanate, a modified carbodiimide, and a modified uretdione of such diisocyanates, a urethane prepolymer obtained by allowing such polyisocyanates and polyol to react with each other, and the like, and among them, one can be used alone or a plurality thereof can be used in combination.

Examples of the aromatic diisocyanate may include 2,2'-diphenyl methane diisocyanate, 2,4'-diphenyl methane diisocyanate, 4,4'-diphenyl methane diisocyanate, polymethylene polyphenyl polyisocyanate (also referred to as polymeric MDI or crude MDI), 1,3-phenylene diisocyanate, 4,4'-diphenyl diisocyanate, 1,4-phenylene diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenyl ether diisocyanate, and 4,4',4°-triphenyl methane triisocyanate, but the aromatic diisocyanate is not limited thereto.

The aromatic aliphatic diisocyanate indicates aliphatic isocyanate having one or more aromatic rings in molecules, and examples thereof may include m- or p-xylylene diisocyanate (Alternate Name: XDI), and α,α,α',α'-tetramethyl xylylene diisocyanate (Alternate Name: TMXDI), but the aromatic aliphatic diisocyanate is not limited thereto.

Examples of the aliphatic diisocyanate may include trimethylene diisocyanate, tetramethylene diisocyanate, hexamethylene diisocyanate (Alternate Name: HDI), pentamethylene diisocyanate, 1,2-propylene diisocyanate, 2,3-butylene diisocyanate, 1,3-butylene diisocyanate, dodecamethylene diisocyanate, and 2,4,4-trimethyl hexamethylene diisocyanate, but the aliphatic diisocyanate is not limited thereto.

Examples of the alicyclic diisocyanate may include 3-isocyanate methyl-3,5,5-trimethyl cyclohexyl isocyanate, isophorone diisocyanate (Alternate Name: IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylene bis(cyclohexyl isocyanate), and 1,4-bis(isocyanate methyl) cyclohexane, but the alicyclic diisocyanate is not limited thereto.

Examples of the polyol used in the synthesis of the urethane prepolymer include: alkylene glycol such as ethylene glycol, propylene glycol, 13-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, 1,4-cyclohexanediol, and 1,4-cyclohexane dimethanol;
bisphenol such as bisphenol A, bisphenol F, hydrogenated bisphenol A, and hydrogenated bisphenol F;
dimer diol;
bishydroxyethoxybenzene;
polyalkylene glycol such as diethylene glycol, triethylene glycol, other polyethylene glycols, polypropylene glycol, and polybutylene glycol;
urethane bond-containing polyether polyol obtained by further polymerizing polyalkylene glycol with aromatic or aliphatic polyisocyanate;
polyester polyol obtained by allowing alkylene glycol or polyalkylene glycol and at least one type of an aliphatic dicarboxylic acid having 2 to 13 carbon atoms, such as an oxalic acid, a malonic acid, a succinic acid, a glutaric acid, an adipic acid, a fumaric acid, a maleic acid, a suberic acid, an azelaic acid, a sebacic acid, an undecanedioic acid, a dodecanedioic acid, and a tridecanedioic acid, and an aromatic polycarboxylic acid such as an orthophthalic acid, an isophthalic acid, a terephthalic acid, a trimellitic acid, and a pyromellitic acid to react with each other; and
polyester polyol, which is a reactant between polyester obtained by a ring-opening polymerization reaction of a cyclic ester compound such as propiolactone, butyrolactone, ε-caprolactone, σ-valerolactone, and β-methyl-σ-valerolactone, and polyhydric alcohol such as glycol, glycerin, trimethylol propane, and pentaerythritol.

From the viewpoint of reducing an initial aggregation force and an aging time, it is preferable to use aromatic diisocyanate and/or a derivative thereof

The urethane prepolymer (A1) is obtained by allowing the polyester polyol (a1), the polyether polyol (a2), and the polyisocyanate compound (a3) described above to react with each other, in a condition of excessive isocyanate groups. A ratio [NCO]/[OH] of a molar number [NCO] of an isocyanate group to a molar number [OH] of a hydroxyl group provided to the reaction is preferably 1.0 or more and 3.0 or less. The ratio is more preferably 1.5 to 2.0.

### (Isocyanate Compound (A2))

The polyisocyanate composition (A) may contain an isocyanate compound (A2) other than the urethane prepolymer. As the isocyanate compound (A2), the same as the polyisocyanate compound (a3) described above can be used.

The viscosity of the polyisocyanate composition (A) is adjusted in a range suitable for a non-solvent lamination method. As an example, the viscosity at 40°C is adjusted in a range of 500 to 5000 mPas, and more preferably in a range of 500 to 3000 mPas. As an example, the viscosity of the polyisocyanate composition (A) can be adjusted in accordance with the compound amount of the urethane prepolymer (A1), or the compound amount of the isocyanate compound (A2).

### (Polyol Composition (B))

### (Polyester Polyol (B1))

The polyol composition (B) used in the adhesive of the invention contains polyester polyol (B 1), which is a reaction product between a polycarboxylic acid (b1-1) and polyhydric alcohol (b1-2). In addition, the polyhydric alcohol (b1-2) contains 80% by mass or more of diethylene glycol.

As the polycarboxylic acid (b1-1), the same as the polycarboxylic acid (a1-1) can be used. Among them, it is preferable to contain an adipic acid, from the viewpoint of being excellent in an effect of decreasing the viscosity of the polyester polyol (B1) to improve wettability with respect to a base material or the coatability at a low temperature. The compound amount of the adipic acid can be suitably adjusted in accordance with a coating condition or the like, and as an example, is preferably 10% by mass or more and 50% by mass or less with respect to the polycarboxylic acid (b1-1).

In addition, it is preferable that the polycarboxylic acid (b1-1) contains an isophthalic acid, from the viewpoint of being excellent in an effect of improving the aggregation force of the polyester polyol (B1) to **suppress** the aggregation of air bubbles, and obtaining a laminate with an excellent appearance even in a case where barrier films are pasted with each other. It is preferable that the compound amount of the isophthalic acid is 50% by mass or more and 70% by mass or less with respect to the polycarboxylic acid (b1-1).

It is preferable that the total amount of the adipic acid and the isophthalic acid is 90% by mass or more with respect to the polycarboxylic acid (b-1).

As the polyhydric alcohol (b1-2) that can be used together with the diethylene glycol, the same as the polyhydric alcohol (a1-2) can be used. The compound amount of the diethylene glycol is preferably 90% by mass or more, and more preferably 95% by mass or more, with respect to the polyhydric alcohol (b1-2), from the viewpoint of being excellent in an effect of suppressing the re-dissolution of the ink. The total amount of the polyhydric alcohol (b1-2) may be diethylene glycol.

The number average molecular weight of the polyester polyol (B1) is not particularly limited, and as an example, is preferably 500 or more and 3,000 or less.

It is preferable that the compound amount of the polyester polyol (B1) is 50% by mass or more with respect to the polyol composition (B). Accordingly, it is possible to increase the aggregation force of the adhesive, suppress the aggregation and growth of the air bubbles, and make the appearance of the laminate excellent

### (Monool Compound (B2))

It is preferable that the polyol composition (B) contains a monool compound (B2). Accordingly, it is possible to more effectively suppress the occurrence of an appearance defect of the laminate due to the air bubbles. It is assumed that this is because the monool compound (B2) does not have a hydroxyl group on one terminal, and thus, easily decreases the viscosity of the polyol composition (B) such that the entrapment of the air bubbles when applying the adhesive is suppressed. Further, the cross-linking density of an adhesive layer is decreased and the flexibility thereof is improved by containing the monool compound (B2), and thus, the adhesion to a vapor deposition layer of a metal or a metal oxide can be improved. It is also possible to obtain an effect of improving the coatability or low temperature workability.

The main chain of the monool compound (B2) is not particularly limited, and examples thereof include a vinyl resin, an acrylic resin, polyester, an epoxy resin, a urethane resin, and the like, which have one hydroxyl group. In addition, aliphatic alcohol, alkyl alkylene glycol, and the like can also be used. The main chain of the monool compound (B2) may be a linear chain, or may be a branched chain. The bonding position of the hydroxyl group is not particularly limited, and it is preferable that the bonding position is on the terminal of the molecular chain

Specific examples of such a monool compound (B2) include: aliphatic monool such as methanol, ethanol, propanol, butanol, pentanol, hexanol, heptanol, octanol, nonanol, decanol lauryl alcohol, myristyl alcohol, pentadecanol, cetyl alcohol, heptadecanol, stearyl alcohol, nonadecanol, other alkanols (C20 to 50), oleyl alcohol, and an isomer thereof;
alicyclic monool such as cyclohexanol, methyl cyclohexanol, 4-butyl cyclohexanol, 4-pentyl cyclohexanol, 4-hexyl cyclohexanol, cyclodecanol, cyclododecanol, cyclopentadecanol, 4-isopropyl cyclohexanol, 3,5,5-trimethyl cyclohexanol, menthol, 2norbomanol, borneol, 2-adamantanol, dicyclohexyl methanol, dekatol, 2-cyclohexyl cyclohexanol, 4-cyclohexyl cyclohexanol, 4-(4-propyl cyclohexyl)cyclohexanol, 4-(4-pentyl cyclohexyl)cyclohexanol, α-ambrinol, desoxycorticosterone, 11-dehydnooorticosterone, cholesterol, β-sitosterol, campesterol, stigmasterol, brassicasterol, lanosterol, ergosterol, β-cholestanol, testosterone, estrone, digitoxigenin, dehydroepiandrosterone, coprostanol, pregnenolone, epicholestanol, 7-dehydrocholesterol, estradiol benzoate, tigogenin, hecogenin, methane dienone, cortisone acetate, stenolon, and an isomer thereof;
aromatic aliphatic monool such as benzyl alcohol; and
polyoxyalkylene monool obtained by ring-opening-addition-polymerizing alkylene oxide such as ethylene oxide, propylene oxide, butylene oxide, and tetrahydrofuran with an alkyl compound or the like, which contains one active hydrogen, as an initiator.

Among them, it is preferable to use the polyoxyalkylene monool, and it is preferable to use the polypropylene glycol monomethyl ether, the polypropylene glycol monoethyl ether, and the polypropylene monobutyl ether.

The compound amount of the monool compound (B2) can be suitably adjusted in accordance with desired physical properties, and as an example, it is preferable that the compound amount is 1% by mass or more with respect to the total amount of the polyester polyol (B1) and the monool compound (B2), from the viewpoint of easily obtaining the effect described above. The compound amount is more preferably 3% by mass or more, and even more preferably 5% by mass or more, with respect to the polyol composition (X). In addition, in order to maintain the aggregation force of the adhesive, it is preferable that the compound amount is 30% by mass or less with respect to the total amount of the polyester polyol (B1) and the monool compound (B2).

### (Polyol (B3))

The polyol composition (B) may contain polyol (B3) other than the polyester polyol (B1) and the monool compound (B2). Examples of such polyol (B3) include: glycol such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexane dimethanol, and triethylene glycol;
trifunctional or tetrafunctional aliphatic alcohol such as glycerin, trimethylol propane, and pentaerythritol;
bisphenol such as bisphenol A, bisphenol F, hydrogenated bisphenol A, and hydrogenated bisphenol F; dimer diol;
polyether polyol obtained by addition polymerizing alkylene oxide such as ethylene oxide, propylene oxide, butylene oxide, styrene oxide, epichlorohydrin, tetrahydrofuran, and cyclohexylene in the presence of a polymerization initiator such as the glycol and the trifunctional or tetrafunctional aliphatic alcohol;
polyether urethane polyol obtained by further polymerizing polyether polyol with the aromatic or aliphatic polyisocyanate;
polyester polyol (1), which is a reactant between polyester obtained by a ring-opening polymerization reaction of a cyclic ester compound such as propiolactone, butyrolactone, s-caprolactone, σ-valerolactone, and β-methyl-σ-valerolactone and polyhydric alcohol such as the glycol, the glycerin, the trimethylol propane, and the pentaerythritol;
polyester polyol (2) obtained by allowing difunctional polyol such as the glycol, the dimer diol, or the bisphenol, and a polycarboxylic acid to react with each other;
polyester polyol (3) obtained by allowing trifunctional or tetrafunctional aliphatic alcohol and a polycarboxylic acid to react with each other;
polyester polyol (4) obtained by allowing difunctional polyol, the trifunctional or tetrafunctional aliphatic alcohol, and a polycarboxylic acid to react with each other;
polyester polyol (5), which is a polymer of a hydroxyl acid such as a dimethylol propionic acid and a castor oil fatty acid,
polyester polyether polyol obtained by allowing the polyester polyol (1) to the polyester polyol (5), the polyether polyol, and the aromatic or aliphatic polyisocyanate to react with each other;
polyester polyurethane polyol obtained by polymerizing the polyester polyol (1) to the polyester polyol (5) with the aromatic or aliphatic polyisocyanate; and
castor oil-based polyol such as castor oil, dehydrated castor oil, hydrogenated castor oil, which is a hydrogenated product of castor oil, and a castor oil adduct with 5 to 50 mol of alkylene oxide, and a mixture thereof Examples of the polycarboxylic acid used in the preparation of the polyester polyol (2) include the polycarboxylic acid exemplified as the raw material of the polyester polyol (B1).

The compound amount of the polyol (B3) is not particularly limited, and it is preferable that the compound amount is 50% by mass or less with respect to the total amount of the polyester polyol (B1) and the polyol (B3).

The viscosity of the polyol composition (B) is adjusted in a range suitable for a non-solvent lamination method. As an example, the viscosity at 40°C is adjusted in a range of 100 to 5000 mPas, more preferably in a range of 100 to 3000 mPas. As an example, the viscosity of the polyol composition (B) can be adjusted in accordance with the skeleton of the polyester polyol (B1), and a plasticizer (C5) described below.

### (Other Components (C) of Adhesive)

The adhesive of the invention may contain components other than the components described above. The other components (C) may be contained in any one or both of the polyisocyanate composition (A) and the polyol composition (B), or may be prepared separately and mixed with the polyisocyanate composition (A) and the polyol composition (B) immediately before applying the adhesive. Hereinafter, each of the components will be described.

### (Catalyst (C1))

As a catalyst (C1), a metal-based catalyst, an amine-based catalyst, an aliphatic cyclic amide compound, and the like are exemplified.

Examples of the metal-based catalyst (C1) include a metal complex-based catalyst, an inorganic metal-based catalyst, and an organic metal-based catalyst As the metal complex-based catalyst, an acetyl acetonate of a metal selected from the group consisting of iron (Fe), manganese (Mn), copper (Cu), zirconium (Zr), thorium (Th), titanium (Ti), aluminum (Al), and cobalt (Co), for example, iron acetyl acetonate, manganese acetyl acetonate, copper acetyl acetonate, zirconia acetyl acetonate, and the like are exemplified.

Examples of the inorganic metal-based catalyst include an inorganic metal-based catalyst selected from Sn, Fe, Mn, Cu, Zr, Th, Ti, Al, Co, and the like.

Examples of the organic metal-based catalyst include an organic zinc compound such as zinc octylate, zinc neodecanoate, and zinc naphthenate, an organic tin compound such as stannous diacetate, stannous dioctoate, stannous dioleate, stannous dilaurate, dibutyl tin diacetate, dibutyl tin dilaurate, dioctyl tin dilaurate, dibutyl tin oxide, and dibutyl tin dichloride, an organic nickel compound such as nickel octylate and nickel naphthenate, an organic cobalt compound such as cobalt octylate and cobalt naphthenate, an organic bismuth compound such as bismuth octylate, bismuth neodecanoate, and bismuth naphthenate, and a titanium-based compound such as tetraisopropyl oxytitanate, dibutyl titanium dichloride, tetrabutyl titanate, butoxy titanium trichloride, and a titanium chelate complex including at least one type of aliphatic diketone, aromatic diketone, and alcohol having 2 to 10 carbon atoms as a ligand.

Examples of the amine-based catalyst include triethylene diamine, 2-methyl triethylene diamine, quinuclidine, 2-methyl quinuclidine, N,N,N',N'-tetramethyl ethylene diamine, N,N,N',N'-tetramethyl propylene diamine, N,N,N',N",N"-pentamethyl diethylene triamine, N,N,N',N",N"-pentamethyl-(3-aminopropyl) ethylene diamine, N,N,N',N",N"-pentamethyl dipropylene triamine, N,N,N',N'-tetramethyl hexamethylene diamine, bis(2-dimethyl aminoethyl) ether, dimethyl ethanol amine, dimethyl isopropanol amine, dimethyl aminoethoxyethanol, N,N-dimethyl-N'-(2-hydroxyethyl) ethylene diamine, N,N-dimethyl-N'-(2-hydroxyethyl) propane diamine, bis(dimethyl aminopropyl) amine, bis(dimethyl aminopropyl) isopropanol amine, 3-quinuclidinol, N,N,N',N'-tetramethyl guanidine, 1,3,5-tris(N,N-dimethyl aminopropyl) hexahydro-S-triazine, 1,8-diazabicyclo[5.4.0]undecene-7, N-methyl-N'-(2-dimethyl aminoethyl) piperazine, N,N'-dimethyl piperazine, dimethyl cyclohexyl amine, N-methyl morpholine, N-ethyl morpholine, 1-methyl imidazole, 1,2-dimethyl imidazole, 1-isobutyl-2-methyl imidazole, 1-dimethyl aminopropyl imidazole, N,N-dimethyl hexanol amine, N-methyl-N'-(2-hydroxyethyl) piperazine, 1-(2-hydroxyethyl) imidazole, 1-(2-hydroxypropyl) imidazole, 1-(2-hydroxyethyl)-2-methyl imidazole, and 1-(2-hydroxypropyl)-2-methyl imidazole.

Examples of the aliphatic cyclic amide compound include δ-valerolactam, ε-caprolactam, ω-enantholactam, η-capryllactam, and β-propiolactam. Among them, the ε-caprolactam is effective from the viewpoint of curing acceleration.

### (Acid Anhydride (C2))

Examples of an acid anhydride (C2) include a cyclic aliphatic anhydride, an aromatic anhydride, and unsaturated carboxylic anhydride, and among them, one type or two or more types can be used in combination. More specifically, for example, a phthalic anhydride, a trimellitic anhydride, a pyromellitic anhydride, a benzophenone tetracarboxylic anhydride, a dodecenyl succinic anhydride, a polyadipic anhydride, a polyazelaic anhydride, a polysebacic anhydride, a poly(ethyl octadecanedioic) anhydride, a poly(phenyl hexadecanedioic) anhydride, a tetrahydrophthalic anhydride, a methyl tetrahydrophthalic anhydride, a methyl hexahydrophthalic anhydride, a hexahydrophthalic anhydride, a methyl himic anhydride, a trialkyl tetrahydrophthalic anhydride, a methyl cyclohexene dicarboxylic anhydride, a methyl cyclohexene tetracarboxylic anhydride, an ethylene glycol bistrimellitate dianhydride, a het anhydride, a nadic anhydride, a methyl nadic anhydride, a 5-(2,5-dioxotetrahydro-3-furanyl)-3-methyl-3-cyclohexane-1,2-dicarboxylic anhydride, a 3,4-dicaiboxy-1,2,3,4-tetrahydro-1-naphthalene succinic dianhydride, a 1-methyl-dicarboxy-1,2,3,4-tetrahydro-1-naphthalene succinic dianhydride, and the like are included in the examples of the acid anhydride (C2).

In addition, as the acid anhydride (C), an acid anhydride obtained by modifying the compound described above with glycol may be used. Examples of the glycol that can be used in the modification include alkylene glycols such as ethylene glycol, propylene glycol, and neopentyl glycol; and polyether glycols such as polyethylene glycol, polypropylene glycol, and polytetramethylene ether glycol. Further, among them, copolymerized polyether glycol of two or more types of glycols and/or polyether glycols can also be used.

### (Coupling Agent (C3))

Examples of a coupling agent (C3) include a silane coupling agent, a titanate-based coupling agent, and an aluminum-based coupling agent

Examples of the silane coupling agent include aminosilane such as γ-aminopropyl triethoxy silane, γ-aminopropyl trimethoxy silane, N-β(aminoethyl)-γ-aminopropyl trimethoxy silane, N-β(aminoethyl)-γ-aminopropyl trimethyl dimethoxy silane, and N-phenyl-γ-aminopropyl trimethoxy silane; epoxy silane such as β-(3,4-epoxy cyclohexyl) ethyl trimethoxy silane, γ-glycidoxypropyl trimethoxy silane, and γ-glycidoxypropyl triethoxy silane; vinyl silane such as vinyl tris(β-methoxyethoxy) silane, vinyl triethoxy silane, vinyl trimethoxy silane, and γ-methacryloxypropyl trimethoxy silane; hexamethyl disilazane, and γ-mercaptopropyl trimethoxy silane.

Examples of the titanate-based coupling agent include tetraisopropoxy titanium, tetra-n-butoxy titanium, butyl titanate dimer, tetrastearyl titanate, titanium acetyl acetonate, titanium lactate, tetraoctylene glycol titanate, titanium lactate, and tetrastearoxy titanium.

Examples of the aluminum-based coupling agent include acetoalkoxy aluminum diisopropylate.

### (Pigment (C4))

A pigment (C4) is not particularly limited, and examples thereof include an extender pigment, an organic pigment or an inorganic pigment such as a white pigment, a black pigment, a gray pigment, a red pigment, a brown pigment, a green pigment, a blue pigment, a metal powder pigment, a light emitting pigment, and a pearl pigment, and further include a plastic pigment, which are described in Handbook of Painting Material, published in 1970 (edited by Japan Paint Manufacturers Association).

Examples of the extender pigment include settleable barium sulfate, a powder, settleable calcium carbonate, calcium bicarbonate, white marble, white alumina, silica, fine hydrous silica powder (white carbon), ultrafine anhydrous silica powder (AEROSIL), silica sand, talc, settleable magnesium carbonate, bentonite, clay, kaolinite, ocher, and the like.

Specific examples of the organic pigment include various insoluble azo pigments such as Benzidine Yellow, Hansa Yellow, and Laked 4R; a soluble azo pigment such as Laked C, Carmine 6B, and Bordeaux 10; various (copper) phtalocyanine-based pigments such as Phtalocyanine Blue and Phtalocyanine Green, various chlorine dyeing lakes such as Rhodamine Lake and Methyl Violet Lake; various mordant dye-based pigments such as Quinoline Lake and Fast Sky Blue; various vat dye-based pigments such as an anthraquinone-based pigment, a thioindigo-based pigment, and a perinone-based pigment; various quinacridone-based pigments such as Shinkasha Red B; various dioxazine-based pigments such as Dioxazine Violet; various condensed azo pigments such as Cromophtal; and Aniline Black.

Examples of the inorganic pigment include various chromates such as Lead Yellow, zinc chromate, and Molybdate Orange; various fenocyanic compounds such as Prussian Blue; various metal oxides such as titanium oxide, zinc oxide, Mapico Yellow, iron oxide, Bengala, Chromium Oxide Green, and zirconium oxide; various sulfides or selenides such as Cadmium Yellow, Cadmium Red, and mercury sulfide; various sulfates such as barium sulfate and lead sulfate; various silicates such as calcium silicate and Ultramarine; various carbonates such as calcium carbonate and magnesium carbonate; various phosphates such as Cobalt Violet and Manganese Violet; various metal powder pigments such as an aluminum powder, a gold powder, a silver powder, a copper powder, a bronze powder, and a brass powder, a flake pigment and a micalflake pigment of such metals; a metallic pigment or a pearl pigment such as a micalflake pigment in the form of covering a metal oxide, micashaped iron oxide pigment, graphite, and carbon black.

Examples of the plastic pigment include "GRANDOLL PP-1000", and "PP-2000S", which are manufactured by DIC Corporation.

The pigment (C4) to be used may be suitably selected in accordance with the purpose, and for example, from the viewpoint of excellent durability, weather resistance, and designability, it is preferable to use an inorganic oxide such as titanium oxide and zinc oxide as the white pigment, and it is preferable to use carbon black as the black pigment

As an example, the compound amount of the pigment (C4) is 1 to 400 parts by mass with respect to 100 parts by mass of the total amount of the solid contents of the polyisocyanate composition (A) and the polyol composition (B), and more preferably 10 to 300 parts by mass, from the viewpoint of more excellent adhesiveness and blocking resistance.

### (plasticizer (C5))

Examples of a plasticizer include a phthalic acid-based plasticizer, a fatty acid-based plasticizer, an aromatic polycarboxylic acid-based plasticizer, a phosphoric acid-based plasticizer, a polyol-based plasticizer, an epoxy-based plasticizer, a polyester-based plasticizer, and a carbonate-based plasticizer.

Examples of the phthalic acid-based plasticizer include a phthalic acid ester-based plasticizer such as dimethyl phthalate, diethyl phthalate, dibutyl phthalate, diisobutyl phthalate, dihexyl phthalate, diheptyl phthalate, di-(2-ethyl hexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyl decyl phthalate, dimethyl isophthalate, di-(2-ethyl hexyl) isophthalate, and diisooctyl isophthalate, and, a tetrahydrophthalic acid ester-based plasticizer such as di-(2-ethyl hexyl) tetrahydrophthalate, di-n-octyl tetrahydrophthalate, and diisodecyl tetrahydrophthalate.

Examples of the fatty acid-based plasticizer include an adipic acid-based plasticizer such as di-n-butyl adipate, di-(2-ethyl hexyl) adipate, diisodecyl adipate, diisononyl adipate, di(C6-C10 alkyl) adipate, and dibutyl diglycol adipate, an azelaic acid-based plasticizer such as di-n-hexyl azelate, di-(2-ethyl hexyl) azelate, and diisooctyl azelate, for example, a sebacic acid-based plasticizer such as di-n-butyl sebacate, di-(2-ethyl hexyl) sebacate, and diisononyl sebacate, for example, a maleic acid-based plasticizer such as dimethyl malate, diethyl malate, di-n-butyl malate, and di-(2-ethyl hexyl) malate, a fumaric acid-based plasticizer such as di-n-butyl fumarate and di-(2-ethyl hexyl) fumarate, for example, an itaconic acid-based plasticizer such as monomethyl itaconate, monobutyl itaconate, dimethyl itaconate, diethyl itaconate, dibutyl itaconate, di-(2-ethyl hexyl) itaconate, for example, a stearic acid-based plasticizer such as n-butyl stearate, glycerin monostearate, and diethylene glycol distearate, an oleic acid-based plasticizer such as butyl oleate, glyceryl monooleate, and diethylene glycol monooleate, for example, a citric acid-based plasticizer such as triethyl citrate, tri-n-butyl citrate, acetyl triethyl citrate, acetyl tributyl citrate, and acetyl tri-(2-ethyl hexyl) citrate, a ricinoleic acid-based plasticizer such as methyl acetyl ricinoleate, butyl acetyl ricinoleate, glyceryl monoricinoleate, and diethylene glycol monoricinoleate, and other fatty acid-based plasticizers such as diethylene glycol monolaurate, diethylene glycol dipelargonate, and pentaerythritol fatty acid ester.

Examples of the aromatic polycarboxylic acid-based plasticizer include a trimellitic acid-based plasticizer such as tri-n-hexyl trimellitate, tri-(2-ethyl hexyl) trimellitate, tri-n-octyl trimellitate, triisooctyl trimellitate, triisononyl trimellitate, tridecyl trimellitate, and triisodecyl trimellitate, and a pyromellitic acid-based plasticizer such as tetra-(2-ethyl hexyl) pyromellitate and tetra-n-octyl pyromellitate.

Examples of the phosphoric acid-based plasticizer include triethyl phosphate, tributyl phosphate, tri-(2-ethyl hexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropyl phenyl) phosphate.

Examples of the polyol-based plasticizer include a glycol-based plasticizer such as diethylene glycol dibenzoate, dipropylene glycol dibenzoate, triethylene glycol dibenzoate, triethylene glycol di-(2-ethyl butyrate), triethylene glycol di-(2-ethyl hexoate), and dibutyl methylene bisthioglycolate, and a glycerin-based plasticizer such as glycerol monoacetate, glycerol triacetate, and glycerol tributyrate.

Examples of the epoxy-based plasticizer include epoxidized soybean oil, epoxy butyl stearate, epoxy di-2-ethyl hexyl hexahydrophthalate, epoxy diisodecyl hexahydrophthalate, epoxy triglyceride, epoxidized octyl oleate, and epoxidized decyl oleate.

Examples of the polyester-based plasticizer include adipic acid-based polyester, sebacic acid-based polyester, and phthalic acid-based polyester.

Examples of the carbonate-based plasticizer include propylene carbonate, and ethylene carbonate.

In addition, examples of the plasticizer further include partially hydrogenated terphenyl, an adhesive plasticizer, and a polymerizable plasticizer such as diallyl phthalate, and an acrylic monomer or oligomer. One of the plasticizers can be used alone, or two or more types thereof can be used together.

### (Phosphoric Acid Compound (C6))

Examples of a phosphoric acid compound (C6) include a phosphoric acid, a pyrophosphoric acid, a triphosphoric acid, methyl acid phosphate, ethyl acid phosphate, butyl acid phosphate, dibutyl phosphate, 2-ethyl hexyl acid phosphate, bis(2-ethyl hexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid

### (Form of Adhesive)

The adhesive of the invention is used in a solvent-free form. Note that, in this description, a "solvent-free" adhesive indicates an adhesive in the form where the polyisocyanate composition (A) and the polyol composition (B) do not substantially contain an organic solvent with high solubility, such as esters such as ethyl acetate, butyl acetate, and cellosolve acetate, ketones such as acetone, methyl ethyl ketone, isobutyl ketone, and cyclohexanone, ethers such as tetrahydrofuran and dioxane, aromatic hydrocarbons such as toluene and xylene, halogenated hydrocarbons such as methylene chloride and ethylene chloride, dimethyl sulfoxide and dimethyl sulfonamide, and in particular, the ethyl acetate or the methyl ethyl ketone, and thus, the adhesive is used in a method for pasting the base material to another base material without a step of volatilizing the solvent by heating in an oven or the like after coating the base material with the adhesive, a so-called non-solvent lamination method. In a case where the constituent of the polyisocyanate composition (A) or the polyol composition (B), or an organic solvent used as a reaction medium when producing the raw materials is not completely removed, and thus, a small amount of organic solvent remains in the polyisocyanate composition (A) or the polyol composition (B), it is understood that the organic solvent is not substantially contained. In addition, in a case where the polyol composition (B) contains low-molecular-weight alcohol, the low-molecular-weight alcohol reacts with the polyisocyanate composition (A) to be a part of a coating film, and thus, is not required to be volatilized after coating. Accordingly, such a form is also treated as the solvent-free adhesive, and the low-molecular-weight alcohol is not regarded as an organic solvent.

It is preferable to use the adhesive of the invention by compounding the polyisocyanate composition (A) and the polyol composition (B) such that a ratio [NCO]/[OH] of a molar number [NCO] of an isocyanate group in the polyisocyanate composition (A) to a molar number [OH] of a hydroxyl group in the polyol composition (B) is 1.0 to 3.0. Accordingly, it is possible to obtain suitable curing properties without depending on the environmental humidity when performing coating.

The reason that the adhesive of the invention is excellent in suppressing the appearance defect due to the air bubbles and suppressing the appearance defect due to the re-dissolution of the ink is assumed as follows. Fine air bubbles entrapped in the adhesive when performing coating are not visually recognized by human eyes directly, and thus, the appearance defect does not occur, but in a case where the air bubbles are gradually aggregated in an aging step to have a size that is visually recognized, the appearance defect occurs. In general, the appearance defect due to the air bubbles is less likely to occur in a case where the compound contained in the polyisocyanate composition (A) and the polyol composition (B) has a polyester skeleton, and is likely to occur in a case where the compound has a polyether skeleton. It is considered that this is because the aggregation force of the adhesive itself is high in the case of having a polyester skeleton, and thus, the aggregation of the air bubbles is hindered.

On the other hand, the appearance defect due to the re-dissolution of the ink is less likely to occur in a case where the compound contained in the polyisocyanate composition (A) and the polyol composition (B) has a polyether skeleton, and is likely to occur in a case where the compound has a polyester skeleton. In a case where the ink is re-dissolved, the printing layer includes a portion densely filled with the pigment and a portion relatively sparsely filled with the pigment In particular, in the case of using a film including a metal vapor deposition layer of aluminum or the like in one of the base materials to be pasted, a difference between the portion densely filled with the pigment and the portion sparsely filled with the pigment is more easily visually recognized, and thus, when the printing layer is observed from the surface of the laminate, the printing layer looks dark. The appearance defect due to the re-dissolution of the ink is likely to occur as the applied amount of the adhesive decreases, and is less likely to occur as the applied amount increases. The adhesive of the invention is capable of highly suppressing the appearance defect due to the re-dissolution of the ink, and thus, even in a case where the applied amount of the adhesive is small, it is possible to provide the laminate with an excellent appearance.

In the adhesive of the invention, by selecting the diethylene glycol as the compound contained in the polyhydric alcohol (a1-2) and the polyhydric alcohol (b1-2), and setting the compound amount of the polyester polyol (a1) with respect to the total amount of the polyester polyol (a1) and the polyester polyol (a2) to 50% by mass or more and 90% by mass or less, it is possible to suppress the appearance defect due to the air bubbles without impairing the aggregation force of the adhesive derived from the polyester skeleton, and by setting the compound amount of the diethylene glycol with respect to the polyhydric alcohol (a1-2) and the polyhydric alcohol (b1-2) to 80% by mass or more, and the compound amount of the polyether polyol (a2) with respect to the total amount of the polyester polyol (a1) and the polyether polyol (a2) to 10% by mass or more and 50% by mass or less, it is also possible to suppress the re-dissolution of the ink.

The appearance defect due to the air bubbles particularly occurs in a case where the base materials to be pasted are base materials (barrier films) with high gas barrier properties, such as a nylon film or a polyester film, and a film including a vapor deposition layer of a metal such as aluminum and a metal oxide such as silica and alumina, but the adhesive of the invention is excellent in suppressing the occurrence of the appearance defect due to the air bubbles even in the case of pasting the barrier films.

In addition, the solvent free adhesive has a relatively low molecular weight, compared to the solvent-type adhesive, and thus, has large curing shrinkage, and may have an insufficient adhesive strength in the case of using the film including the vapor deposition layer of the metal or the metal oxide, but the adhesive of the invention is also excellent in the adhesive strength in the case of using such a base material. It is considered that this is because the ratio of an ester bond in the adhesive is high, which interacts with the vapor deposition layer of the metal and the vapor deposition layer of the metal oxide to maintain the adhesive strength.

### <Laminate>

A laminate of the invention is obtained by pasting a plurality of base materials (films or paper sheets) by using the adhesive of the invention, in accordance with a non-solvent lamination method. The film to be used is not particularly limited, and a film according to the usage can be suitably selected. Examples of a film for food packaging include a polyolefin film such as a polyethylene terephthalate (PET) film, a polystyrene film, a polyamide film, a polyacrylonitrile film, a polyethylene film (a low-density polyethylene film (LLDPE), and a high-density polyethylene film (HDPE)), and a polypropylene film (a cast polypropylene film (CPP), and a biaxially oriented polypropylene film (OPP)), a polyvinyl alcohol film, and an ethylene-vinyl alcohol copolymer film.

The film may be subjected to an orientation treatment As an orientation treatment method, it is common to melt and extrude a resin into the shape of a sheet by an extrusion film formation method or the like, and then, to perform simultaneous biaxial orientation or sequential biaxial orientation. In addition, in the case of the sequential biaxial orientation, it is common to first perform a longitudinal orientation treatment, and then, perform a lateral orientation. Specifically, a method for combining the longitudinal orientation using a rate difference between rolls and the lateral orientation using a tenter is generally used.

The surface of the film may be subjected to various surface treatments such as a flame treatment and a corona discharge treatment, as necessary, such that an adhesive layer without a defect such as film cutting or cissing is formed.

Alternatively, a film on which a vapor deposition layer of a metal such as aluminum and a metal oxide such as silica and alumina is laminated, and a barrier film including a gas barrier layer such as polyvinyl alcohol, an ethylene-vinyl alcohol copolymer, and vinylidene chloride may be used. By using such a film, it is possible to obtain the laminate having barrier properties with respect to water vapor, oxygen, alcohol, inert gas, a volatile organic substance (fragrance), and the like.

The paper is not particularly limited, and a known paper base material can be used. Specifically, the paper is produced in a known paper machine by using a natural fiber for papermaking such as wood pulp, but the papermaking condition is not particularly defined. Examples of the natural fiber for papermaking include wood pulp such as softwood pulp and hardwood pulp, non-wood pulp such as Manila hemp pulp, Sisal hemp pulp, and flax pulp, and pulp obtained by performing chemical modification with respect to the pulp described above. As the type of pulp, chemical pulp obtained by a sulfate digestion method, an acidic/neutral/alkaline sulfite digestion method, a sodium carbonate salt digestion method, and the like, ground pulp, chemi-ground pulp, thermo-mechanical pulp, and the like can be used. In addition, various commercially available highquality paper sheets or coated paper sheets, lining paper sheets, impregnated paper sheets, cardboard sheets, paperboard sheets, and the like can also be used.

The adhesive of the invention is capable of highly suppressing the occurrence of the appearance defect due to the air bubbles, and thus, is excellent in suppressing the occurrence of the appearance defect due to the air bubbles even in the case of pasting the base materials with high gas barrier properties, such as a nylon film or a polyester film, and a film (a transparent vapor deposition film) including a vapor deposition layer of a metal such as aluminum and a metal oxide such as silica and alumina. Specific examples of such a configuration include PET Film/Adhesive Layer! Aluminum Vapor Deposition OPP Film, PET Film/Adhesive Layer/Aluminum Vapor Deposition CP Film, PET Film/Adhesive Layer/Aluminum Vapor Deposition PET Film, PET Film/Adhesive Layer/Aluminum Foil, Ny Film! Adhesive Layer/Aluminum Vapor Deposition PET Film, PET Film/Adhesive Layer/Transparent Vapor Deposition PET Film, but the configuration is not limited thereto. Here, the adhesive layer is a cured coating film of the adhesive of the invention.

In the laminate of the invention, a printing layer may be provided between the adhesive layer and the base material (in general, the base material to be the outermost layer with respect to the content). The printing layer is formed by a general printing method, which has been used in printing to a film using various printing inks such as a gravure ink, a flexographic ink, an offset ink, a stencil ink, and an inkjet ink, in the related art.

The adhesive of the invention, which is heated in advance to approximately 40°C to 100°C, is applied to the film or the paper material to be the base material by using a roll such as a gravure roll, and then, the other base material is immediately pasted to obtain the laminate of the invention. It is preferable to perform an aging treatment after laminating. It is preferable that an aging temperature is a room temperature to 70°C, and an aging time is 6 to 240 hours.

The applied amount of the adhesive is suitably adjusted in accordance with the appearance of the laminate (whether there is a defect due to the re-dissolution of the ink), adhesive properties, or the like, and as an example, is 1 g/m² or more and 5 g/m² or less. In a case where the applied amount of the adhesive increases, a winding deviation may easily occur, and from the viewpoint of workability, the applied amount is preferably 1 g/m² or more and 3 g/m² or less.

A laminating rate (the coating rate of the adhesive) can be suitably adjusted in consideration of the appearance of the laminate (whether there is a defect due to the air bubbles or the re-dissolution of the ink), productivity, or the like, and as an example, is 100 to 250 m/minute, and preferably 150 to 200 m/minute. In particular, as the laminating rate increases, the air bubbles are more likely to be entrapped at the time of applying the adhesive, and the appearance defect due to the air bubbles is likely to occur, but according to the adhesive of the invention, it is possible to suppress the appearance defect due to the air bubbles even at a laminating rate of approximately 250 m/minute, and to provide the laminate with an excellent appearance.

The laminate of the invention is obtained by pasting two base materials with the adhesive of the invention, but as necessary, may include another base material. As a method for laminating another base material, another base material may be laminated by a known method, for example, a dry lamination method, a non-solvent lamination method, a heat lamination method, a heat seal method, an extrusion lamination method, and the like. In this case, the adhesive to be used may be or may not be the adhesive of the invention. As another base material, the same base material as described above can be used.

### <Packaging Material>

A packaging material of the invention is obtained by molding the laminate described above into the shape of a bag, and heat-sealing the laminate into the form of a packaging material. There are various packaging materials such as a three-side sealing bag, a four-side sealing bag, a gusset packaging bag, a pillow packaging bag, a gable-top bottomed container, Tetra Classic, a Bruck type, a tube container, a paper cup, and a lid material. In addition, easy opening processing or resealing means may be suitably provided in the packaging material of the invention.

The packaging material of the invention can be mainly used industrially as a packaging material filled with food, a detergent, and a chemical. As a specific usage, examples of the detergent and the chemical include a liquid laundry detergent, a liquid kitchen detergent, a liquid bath detergent, liquid bath soap, a liquid shampoo, a liquid conditioner, a pharmaceutical tablet, and the like. In addition, the packaging material can also be used in a secondary packaging material for packaging the container described above.

### EXAMPLES

Hereinafter, the invention will be described in more detail by specific synthesis examples and examples, and the invention is not limited to the examples. Note that, in the following examples, "parts" and "'/o" represent "parts by mass" and "% by mass", respectively, unless otherwise specified.

### <Polyisocyanate Composition (A)>

### (Synthesis of Polyester Polyol (a1)-1)

A flask provided with a stirrer, a thermometer, a nitrogen gas introduction tube, a rectification tube, a water separator, and the like was charged with 7 parts of ethylene glycol and 35 parts of diethylene glycol, and was heated to 80°C while stirring under a stream of nitrogen gas. Further, a reaction container was charged with 36 parts of an adipic acid and 22 parts of an isophthalic acid while stirring, and was gradually heated such that the upper temperature of the rectification tube was not higher than 100°C, and thus, the internal temperature was retained at 250°C, and an esterification reaction was performed. When an acid value was 12.0 mgKOH/g or less, the temperature was set to 240°C, and the pressure inside the reaction container was gradually reduced such that the reaction was performed at 40 Torr or less, and thus, polyester polyol having a hydroxyl group on both terminals with an acid value of 1.0 mgKOH/g and a hydroxyl value of 84 mgKOHlg was obtained. Such polyester polyol is set to (a1)-1.

### (Synthesis of Polyester Polyols (a1)-2 to (a1)-4)

Polyester polyols (a1)-2 to (a1)-4 were obtained as with the polyester polyol (a1)-1, except that a polycarboxylic acid (a1-1) and polyhydric alcohol (al-2) to be used were changed to those shown in Table 1.

**[Table 1]**

| | | Synthesis Example of Polyester Polyol (a1) | | | |
|---|---|---|---|---|---|
| | | (a1)-1 | (a1)-2 | (a1)-3 | (a1)-4 |
| Polycarboxylic Acid (a1-1) | AA | 36 | 54 | 31 | 33 |
| | IPA | 22 | | | |
| | TPA | | | | 21 |
| | SeA | | | 34 | |
| Polyhydric Alcohol (a1-2) | EG | 7 | | 11 | |
| | DEG | 35 | 46 | | 25 |
| | 1,6-HD | | | | 21 |
| | 2MPD | | | 24 | |
| Total | | 100 | 100 | 100 | 100 |
| OHV (mgKOH/g) | | 84 | 84 | 83 | 80 |
| Compound Amount (%) of DEG with respect to (a1-2) | | 83.3 | 100.0 | 0.0 | 54.3 |
| Compound Amount (%) of AA with respect to (a1-1) | | 62.1 | 100.0 | 47.7 | 61.1 |

### (Synthesis of Polyisocyanate Composition (A)-1)

A flask provided with a stirrer, a thermometer, and a nitrogen gas introduction tube was charged with 54 parts of a mixture of 2,2-diphenyl methane diisocyanate, 2,4-diphenyl methane diisocyanate, and 4,4'-diphenyl methane diisocyanate (hereinafter, simply referred to as "MD1-50"), and was heated to 60°C while stirring under a stream of nitrogen gas. 23 parts of the polyester polyol (a1)-1, and 23 parts of polypropylene glycol (hereinafter, simply referred to as "PPG-1000") with a number average molecular weight of 1000 were dropped several times, were further heated and retained at the internal temperature of 70°C for four hours to perform a urethanization reaction, and thus, a urethane prepolymer having an isocyanate group on both terminals with an NCO group content ratio of 14.7% was obtained. Such a urethane prepolymer is set to (A)-1.

### (Synthesis of Polyisocyanate Compositions (A)-2 to (A)-9)

Polyester polyols (A)-2 to (A)-9 were obtained as with the polyisocyanate composition (A)-1, except that polyester polyol (a1), polyether polyol (a2), and polyisocyanate (a3) to be used were changed to those shown in Tables 2 and 3.

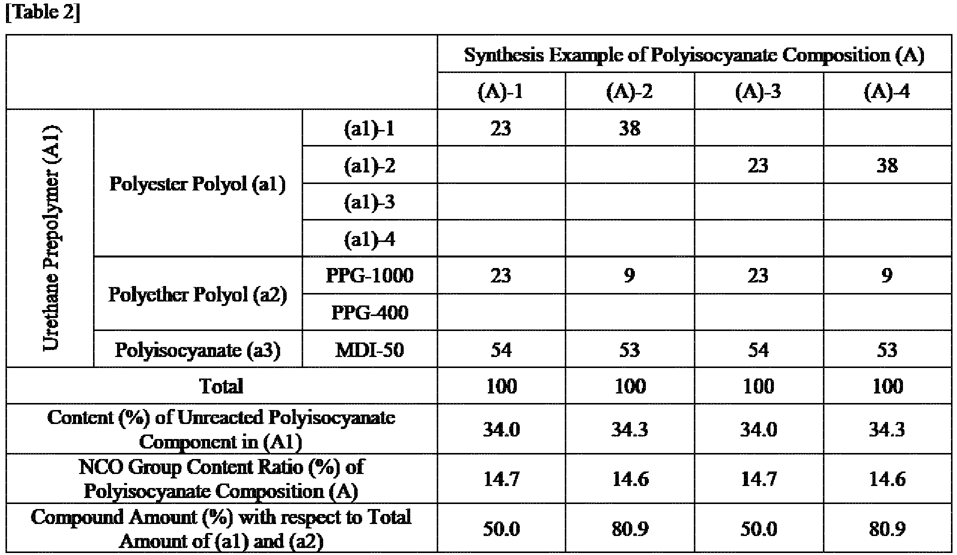

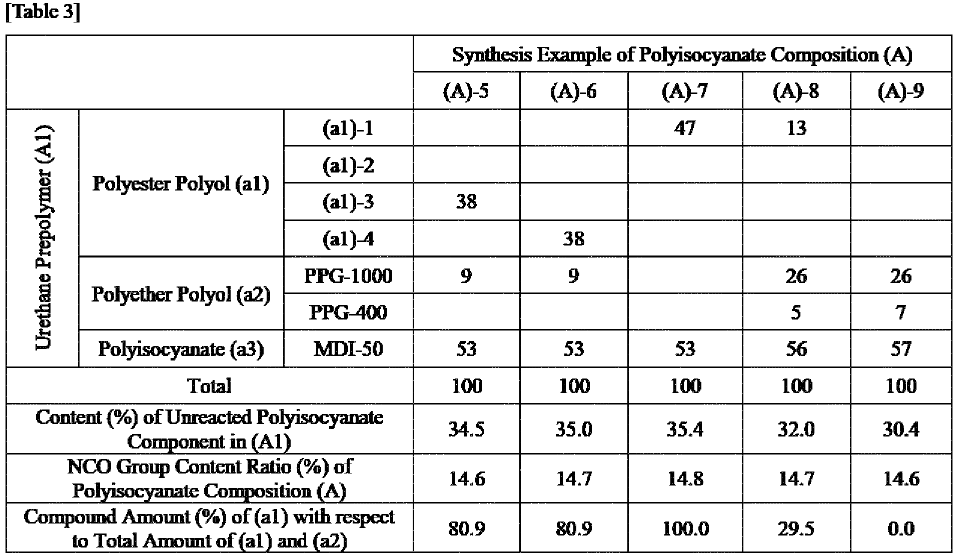

### <Polyol Composition (B)>

### (Synthesis of Polyester Polyol (B1)-1)

A flask provided with a stirrer, a thermometer, a nitrogen gas introduction tube, a rectification tube, a water separator, and the like was charged with 9 parts of ethylene glycol and 39 parts of diethylene glycol, and was heated to 80°C while stirring under a stream of nitrogen gas. Further, a reaction container was charged with 52 parts of an adipic acid while stirring, and was gradually heated such that the upper temperature of the rectification tube was not higher than 100°C, and thus, the internal temperature was retained at 250°C, and an esterification reaction was performed. When an acid value was 6.0 mgKOH/g or less, the temperature was set to 240°C, and the pressure inside the reaction container was gradually reduced such that the reaction was performed at 40 Torr or less, and thus, polyester polyol having a hydroxyl group on both terminals with an acid value of 1.0 mgKOH/g and a hydroxyl value of 203 mgKOH/g was obtained. Such polyester polyol is set to (B1)-1.

### (Synthesis of Polyester Polyols (B1)-2 to (B1)-4)

Polyester polyols (B1)-2 to (B1)-4 were obtained as with the polyester polyol (B1)-1, except that a polycarboxylic acid (b1-1) and polyhydric alcohol (b1-2) to be used were changed to those shown in Table 4.

**[Table 4]**

| | | Synthesis Example of Polyester Polyol (B1) | | | |
|---|---|---|---|---|---|
| | | (B1)-1 | (B1)-2 | (B1)-3 | (B1)-4 |
| Polycarboxylic Acid (b1-1) | AA | 52 | 16 | 10 | 29 |
| | IPA | | 34 | 38 | |
| | TPA | | | | 11 |
| | SeA | | | | 11 |
| Polyhydric Alcohol (b1-2) | EG | 9 | | | 5 |
| | DEG | 39 | 50 | 19 | |
| | 1,6-HD | | | 33 | 23 |
| | NPG | | | | 21 |
| Total | | 100 | 100 | 100 | 100 |
| OHV (mgKOH/g) | | 203 | 200 | 203 | 201 |
| Compound Amount (%) of DEG with respect to (b1-2) | | 81.3 | 100.0 | 36.5 | 0.0 |
| Compound Amount (%) of AA + IPA with respect to (b1-1) | | 100.0 | 100.0 | 100.0 | 56.9 |
| Compound Amount (%) of IPA with respect to (b1-1) | | 0.0 | 68.0 | 79.2 | 0.0 |

### (Preparation of Polyol Composition (B))

Polyol compositions (8)-1 to (B)-10 were prepared in accordance with compounds in Tables 5 and 6.

**[Table 5]**

| | | Preparation Example of Polyol Composition (B) | | | | |
|---|---|---|---|---|---|---|
| | | (B)-1 | (B)-2 | (B)-3 | (B)-4 | (B)-5 |
| Polyester Polyol (B1) | (B1)-1 | 90 | 50 | 80 | 60 | |
| | (B1)-2 | | | | | 90 |
| | (B1)-3 | | | | | |
| | (B1)-4 | | | | | |
| Polyalkylene Glycol Monoalkyl Ether (B2) | | | | 10 | 40 | |
| Castor Oil | | | | | | |
| Polyether Polyol (Trifunctional) | | 10 | 50 | | | |
| Polyether Polyol (Hexafunctional) | | | | 10 | | 10 |
| Total | | 100 | 100 | 100 | 100 | 100 |
| OHV of Polyol Composition (B) (mgKOH/g) | | 199 | 182 | 214 | 173 | 219 |
| Compound Amount (%) of (B1) with respect to (B) | | 90.0 | 50.0 | 80.0 | 60.0 | 90.0 |
| Compound Amount (%) of (B2) with respect to (B) | | 0.0 | 0.0 | 10.0 | 40.0 | 0.0 |

**[Table 6]**

| | | Preparation Example of Polyol Composition (B) | | | | |
|---|---|---|---|---|---|---|
| | | (B)-6 | (B)-7 | (B)-8 | (B)-9 | (B)-10 |
| Polyester Polyol (B1) | (B1)-1 | | | | | |
| | (B1)-2 | 90 | | | | |
| | (B1)-3 | | 70 | | | |
| | (B1)-4 | | | 70 | | |
| Polyalkylene Glycol Monoalkyl Ether (B2) | | 10 | | | | |
| Castor Oil | | | | | | 40 |
| Polyether Polyol (Trifunctional) | | | 30 | 30 | 70 | 60 |
| Polyether Polyol (Hexafunctional) | | | | | 30 | |
| Total | | 100 | 100 | 100 | 100 | 100 |
| OHV of Polyol Composition (B) (mgKOH/g) | | 193 | 190 | 189 | 228 | 161 |
| Compound Amount (%) of (B1) with respect to (B) | | 90.0 | 70.0 | 70.0 | 0.0 | 0.0 |
| Compound Amount (%) of (B2) with respect to (B) | | 10.0 | 0.0 | 0.0 | 0.0 | 0.0 |

Note that, the details of the compounds in Tables 1 to 6 are as follows.
AA: an adipic acid
IPA: an isophthalic acid
TPA: a terephthalic acid
SeA: a sebacic acid
EG: ethylene glycol
DEG: diethylene glycol
1,6-HD: 1,6-hexanediol
2MPD: 2-methyl pentanediol
NPD: neopentyl glycol
MDI-50: a mixture of 2,2-diphenyl methane diisocyanate, 2,4-diphenyl methane diisocyanate, and 4,4-diphenyl methane diisocyanate
PPG-1000: Excenol1020 (manufactured by AGC Inc.)
PPG-400: Excenol420 (manufactured by AGC Inc.)
Polyalkylene Glycol Monoalkyl Ether SMACK MP-70 (manufactured by Kao Corporation)
Polyether Polyol (Trifunctional): Excenol430 (manufactured by AGC Inc.)
Polyether Polyol (Hexafunctional): Excenot38SSO (manufactured by AGC Inc.)

### <Preparation of Adhesive>

The polyisocyanate composition (A) and the polyol composition (B) heated to 40°C were compounded in accordance with Tables 7 and 8, and thus, adhesives of Examples 1 to 6 and Comparative Examples 1 to 7 were prepared.

### <Production of Printed Matter>

A urethane type laminating ink (Finart R794 White G3; manufactured by DIC Corporation) was adjusted to 15 seconds (25°C) with Zahn cup #3 manufactured by Rigo Co. Ltd., was printed on a corona-treated polyethylene terephthalate (PET) film (TOYOBO ESTER Film E5102#12) at a printing rate of 150 m/minute by a gravure printer provided with a gravure engraving having an engraving depth of 43 µm, and was dried or cured by passing through an oven at 70°C, and thus, a printing layer was formed on the PET film.

### <Production of Evaluation Sample 1>

The prepared adhesive was applied onto the surface of the printing layer printed on the PET film at an applied amount of 2.0 g/m² and each of four stages of coating rates of 250 m/minute, 200 m/minute, 150 m/minute, and 100 m/minute by using a solvent-free test coater, and a vapor deposition surface of a aluminum vapor deposition cast polypropylene film (hereinafter, referred to as VMCPP, Thickness: 25 µm) was superimposed on the applied surface to be pasted. Next, aging was performed for 24 hours under an environment of 40°C and 50%RH to cure the adhesive, and a laminate having a configuration of PET/Printing Layer/Adhesive Layer/VMCPP was prepared to obtain Evaluation Sample 1.

### <Production of Evaluation Sample 2>

The prepared adhesive was applied onto the surface of the printing layer printed on the PET film at a coating rate of 200 m/minute and each of applied amounts of 1.8 g/m², 2.1 g/m², 2.3 g/m², and 2.5 g/m² by using a solvent-free test coater, and a vapor deposition surface of VMCPP was superimposed on the applied surface to be pasted. Next, aging was performed for 24 hours under an environment of 40°C and 50%RH to cure the adhesive, and a laminate having a configuration of PET/Printing Layer! Adhesive Layer/VMCPP was prepared to obtain Evaluation Sample 2.

### <Production of Evaluation Sample 3>

The prepared adhesive was applied onto the surface of the printing layer printed on the PET film at a coating rate of 200 m/minute and an applied amount of 2.0 g by using a solvent-free test coater, and a vapor deposition surface of VMCPP was superimposed on the applied surface to be pasted. Next, aging was performed for 48 hours under an environment of 40°C and 50%RH to cure the adhesive, and a laminate having a configuration of PET/Printing Layer/Adhesive Layer/VMCPP was prepared to obtain Evaluation Sample 3.

### <Evaluation>

### (Appearance 1 (Air Bubbles))

The vapor deposition surface was visually observed from the PET side of Evaluation Sample 1 through the printing layer and the adhesive layer, and evaluation was performed on the basis of the following criteria.
5: Even in a case where the coating rate of the adhesive is 250 m/minute, air bubbles with the maximum diameter of 0.1 µm or more are not observed.
4: Even in a case where the coating rate of the adhesive is 200 m/minute, air bubbles with the maximum diameter of 0.1 µm or more are not observed.
3: Even in a case where the coating rate of the adhesive is 150 m/minute, air bubbles with the maximum diameter of 0.1 µm or more are not observed.
2: Even in a case where the coating rate of the adhesive is 100 m/minute, air bubbles with the maximum diameter of 0.1 µm or more are not observed.
1: Even in a case where the coating rate of the adhesive is 100 m/minute, air bubbles with the maximum diameter of 0.1 µm or more are observed.

### (Appearance 2 (Ink Dissolution))

The vapor deposition surface was visually observed from the PET side of Evaluation Sample 2 through the ink layer and the adhesive layer, and evaluation was performed on the basis of the following criteria.
5: Darkening spots are not observed at the applied amount of 1.8 g
4: Darkening spots are not observed at the applied amount of 2.1 g
3: Darkening spots are not observed at the applied amount of 2.3 g
2: Darkening spots are not observed at the applied amount of 2.5 g
1: Darkening spots are observed even at the applied amount of 2.5 g

### (Adhesive Strength)

Evaluation Sample 3 was cut to have a length of 300 mm and a width of 15 mm to be a test piece. The test piece was pulled at a peeling rate of 300 mm/minute under an environment of 25°C by using an Instron type tensile tester, and a T type peeling strength (N) between PET/VMCPP at a width of 15 mm was measured. Such a test was performed 5 times, the average value was obtained, and evaluation was performed on the basis of the following criteria.
5: 1.0 N or more, and peeling between the aluminum vapor deposition layer and CPP or the damage and peeling of the aluminum vapor deposition layer
4: 0.5 N or more and less than 1.0 N, and peeling between the aluminum vapor deposition layer and CPP or the damage and peeling of the aluminum vapor deposition layer
3: 1.0 N or more and less than 1.5 N, and peeling between the adhesive layer and the aluminum vapor deposition
2: 0.5 N or more and less than 1.0 N, and peeling between the adhesive layer and the aluminum vapor deposition
1: 0.5 N or less, and peeling between the adhesive and the aluminum vapor deposition

**[Table 7]**

| | | Example | | | | | |
|---|---|---|---|---|---|---|---|
| | | 1 | 2 | 3 | 4 | 5 | 6 |
| Polyisocyanate Composition (A) | (A)-1 | 60 | | | | | |
| | (A)-2 | | 60 | | | 65 | 60 |
| | (A)-3 | | | 65 | | | |
| | (A)-4 | | | | 60 | | |
| | (A)-5 | | | | | | |
| | (A)-6 | | | | | | |
| | (A)-7 | | | | | | |
| | (A)-8 | | | | | | |
| | (A)-9 | | | | | | |
| Polyol Composition (B) | (B)-1 | 40 | | | | | |
| | (B)-2 | | 40 | | | | |
| | (B)-3 | | | 35 | | | |
| | (B)-4 | | | | 40 | | |
| | (B)-5 | | | | | 35 | |
| | (B)-6 | | | | | | 40 |
| | (B)-7 | | | | | | |
| | (B)-8 | | | | | | |
| | (B)-9 | | | | | | |
| | (B)-10 | | | | | | |
| Total | | 100 | 100 | 100 | 100 | 100 | 100 |
| [NCO]/[OH] | | 1.48 | 1.61 | 1.70 | 1.69 | 1.65 | 1.51 |
| Appearance 1 (Air Bubbles) | | 4 | 4 | 4 | 5 | 5 | 5 |
| Appearance 2 (Ink Dissolution) | | 5 | 4 | 5 | 4 | 5 | 5 |
| Adhesive Strength | | 4 | 4 | 5 | 4 | 4 | 5 |

**[Table 8]**

| | | Comparative Example | | | | | | |
|---|---|---|---|---|---|---|---|---|
| | | 1 | 2 | 3 | 4 | 5 | 6 | 7 |
| Polyisocyanate Composition (A) | (A)-1 | 60 | | | | | | |
| | (A)-2 | | | | | | | |
| | (A)-3 | | | | | | | |
| | (A)-4 | | | | | | | |
| | (A)-5 | | 60 | | | | | 60 |
| | (A)-6 | | | 60 | | | | |
| | (A)-7 | | | | 65 | | | |
| | (A)-8 | | | | | 65 | | |
| | (A)-9 | | | | | | 60 | |
| Polyol Composition (B) | (B)-1 | | | | | | | 40 |
| | (B)-2 | | | | | | | |
| | (B)-3 | | | | | | | |
| | (B)-4 | | | | | | | |
| | (B)-5 | | | | | | | |
| | (B)-6 | | | | | | | |
| | (B)-7 | 40 | 40 | | | | | |
| | (B)-8 | | | 40 | | | | |
| | (B)-9 | | | | 35 | 35 | | |
| | (B)-10 | | | | | | 40 | |
| Total | | 100 | 100 | 100 | 100 | 100 | 100 | 100 |
| [NCO]/[OH] | | 1.55 | 1.54 | 1.56 | 1.61 | 1.60 | 1.81 | 1.47 |
| Appearance 1 (Air Bubbles) | | 4 | 4 | 4 | 3 | 2 | 1 | 4 |
| Appearance 2 (Ink Dissolution) | | 3 | 2 | 1 | 4 | 5 | 5 | 3 |
| Adhesive Strength | | 4 | 4 | 4 | 4 | 3 | 2 | 4 |

## Claims

1. A two-pack curable adhesive, comprising:
a polyisocyanate composition (A) containing a urethane prepolymer (A1), which is a reaction product of polyester polyol (a1), polyether polyol (a2), and a polyisocyanate compound (a3); and
a polyol composition (B) containing polyester polyol (B1), which is a reaction product of a monomer composition containing a polycarboxylic acid (b1-1) and polyol (b1-2),
wherein the polyester polyol (a1) is a reaction product of a monomer composition containing a polycarboxylic acid (a1-1) and polyhydric alcohol (a1-2), the polyhydric alcohol (a1-2) contains 80% by mass or more of diethylene glycol, and the polyester polyol (a1) has a compound amount of 50% by mass or more and 90% by mass or less with respect to a total amount of the polyester polyol (a1) and the polyether polyol (a2), and
the polyhydric alcohol (b1-2) contains 80% by mass or more of diethylene glycol.

2. The two-pack curable adhesive according to claim 1,
wherein the polycarboxylic acid (bl-1) contains an adipic acid.

3. The two-pack curable adhesive according to claim 1 or 2,
wherein the polycarboxylic acid (bl-1) contains an isophthalic acid.

4. The two-pack curable adhesive according to any one of claims 1 to 3,
wherein the adipic acid has a compound amount of 10% by mass or more and 50% by mass or less with respect to the polycarboxylic acid (b1-1).

5. The two-pack curable adhesive according to claim 3 or 4,
wherein the isophthalic acid has a compound amount of 50% by mass or more and 70% by mass or less with respect to the polycarboxylic acid (b1-1).

6. The two-pack curable adhesive according to any one of claims 1 to 5,
wherein the polycarboxylic acid {a1-1) contains 80% by mass or more of an adipic acid.

7. The two-pack curable adhesive according to any one of claims 1 to 6,
wherein the polyol composition (B) contains monool (B2).

8. The two-pack curable adhesive according to claim 7,
wherein the monool (B2) has a compound amount of 30% by mass or less with respect to the polyol composition (B).

9. The two-pack curable adhesive according to any one of claims 1 to 8, further comprising:
a phosphoric acid compound (C6).

10. A laminate comprising:
a first base material;
a second base material; and
an adhesive layer for pasting the first base material and the second base material,
wherein the adhesive layer is a cured coating film of the two-pack curable adhesive according to any one of claims 1 to 9.

11. A packaging material comprising:
the laminate according to claim 10.
